# EUROPEAN PATENT SPECIFICATION

(11) **EP 0 534 889 B1**
(45) Date of publication and mention of the grant of the patent: **13.12.1995**
(21) Application number: 92500122.4
(22) Date of filing: 24.09.1992
(51) Int. Cl.: G01G 19/387, G01G 19/30

(54) **Automatic weighing machine for food products**
Automatische Waage für Nahrungsmittel
Balance automatique pour nourriture

(30) Priority: 27.09.1991 ES 9102129
(43) Date of publication of application: 31.03.1993
(73) Proprietor: TALLERES DAUMAR S.A., E-08912 Badalona (Barcelona) (ES)
(72) Inventor: Dauder Guardiola, Agustin, E-08912 Badalona (Barcelona) (ES)
(74) Representative: Körner, Ekkehard, Dipl.-Ing.

(56) References cited:
- EP-A- 0 045 319
- EP-A- 0 063 056
- EP-A- 0 280 283

## Description

### FIELD OF THE INVENTION

The present patent relates to an automatic weighing machine for food products, as set forth in the preamble of claim 1. A weighing machine of this kind is known from EP-A-0 280 283.

### BACKGROUND OF THE INVENTION

Machines for weighing food products are already known which comprise a relatively high number of containers, for example 10 to 14, which are fed with the products to be weighed from a single common entrance and which are unloaded onto other containers on which the weighing is done. The known weighing machine includes an electronic computer unit that performs the calculation of the possible weight combinations of the products stored in these containers and selects those containers whose sum of weight, in other words total product weight, is most approximate to the weight desired, and orders the discharge on an exit transporter of the machine. This strategy corresponds to what is called "associative weighing," in which the product goes through various weighing points and an electronic calculator looks for a combination whose real value most closely approximates the desired nominal weight.

The automatic weighing machine for food products of aforesaid EP-A-0 280 283 comprises a structure or frame supporting the members of the machine, means for activating these members, means for feeding in the product, means to weigh it, bins to store it temporarily and equipped with means for unloading it onto means to convey it to the exit of the machine and a program processing unit, which continually records the real weight of the product entering the machine as it is being weighed, as well as the real weight of the product which at each moment is contained by all and each one of the temporary storage bins, and when the weight of the product contained in a corresponding bin reaches a value preset by the user of the machine, the program processing unit orders the unloading of all the units of product with this preset final weight; there are appropriate connection means between the above mentioned program processing unit and the corresponding members of the machine, as well as conventional means of control, monitoring, safety, etc. of the machine.

The automatic weighing machine of EP-A-0 280 283 is characterized in that the means for feeding the product into the entrance of the machine, controlled by the program processing unit, comprise a hopper, a conduit and at least one endless belt, whose discharge end is disposed above a series of buckets that are open on the top to receive the product which is unloaded from this end; these buckets are arranged in a circle and joined respectively in an overhanging manner to individual weighing means aligned radially and closer to the center than the buckets themselves; these weighing means are connected with the program processing unit and mounted on a horizontal revolving platform by suitable means in relation to a central vertical axis; the above mentioned buckets have at least one of its walls movably mounted and activated by suitable means and controlled by the program processing unit. Below these buckets, a series of fixed bins are disposed that are open on the top to receive the product already weighed. The at least one movable wall is activated by suitable means and controlled by the program processing unit, to allow for the unloading of each batch of units of product with the preset final weight (with the batch being gathered in a suitable fixed bin). The unloading is performed on the means for conveying the above mentioned batches of product toward the exit of the machine.

The strategy followed by that machine corresponds to what is called "accumulative weighing," in which the program processing units permanently takes account of the real weights of the units of product that it is continually stored temporarily in all the bins of the machine and continually combines them mathematically with the real weights of the units of product as they are being weighed. In this way, a greater production is obtained per time unit of batches of units of products having a preset final weight (and also with a preset tolerance) and also a lesser number of rejected units is obtained in comparison with weighing machines known before.

The concept of using a single weighing station in a combinational weighing apparatus is known from EP-A-0 063 056.

### SUMMARY OF THE INVENTION

However, the applicant has devised certain improvements in automatic weighing machines for food products of the type described above by now using the strategy called "associative weighing" instead of the "accumulative weighing" strategy specific to aforesaid EP-A-0 280 283, since in certain practical applications of this kind of automatic weighing machines the size itself, and/or the relatively large variation of the products to be treated allow for less exactness as to the functionality and structure of the weighing machine.

An automatic weighing machine for food products having the above mentioned improvements that are the object of the present invention is subject matter of claim 1. Preferred embodiments of the invention are subject matter of the dependent claims.

The improvements in automatic weighing machines for food products which are the object of this patent afford, among others and in comparison with known weighing machines, the advantages of requiring a single loading cell for all the buckets, thus maintaining a single feeding and eliminating the temporary storage bins for the products already weighed, and the weighing machine is simpler and has a lower cost, without any affect on its solidity.

The invention is described in greater detail below to facilitate comprehension of the characteristics explained earlier, while at the same time several drawings reveal various details and accompany this document for this purpose; these drawings, only as an example and without limiting the scope of the present invention, represent a practical case of the invention.

### BRIEF DESCRIPTION OF THE DRAWINGS

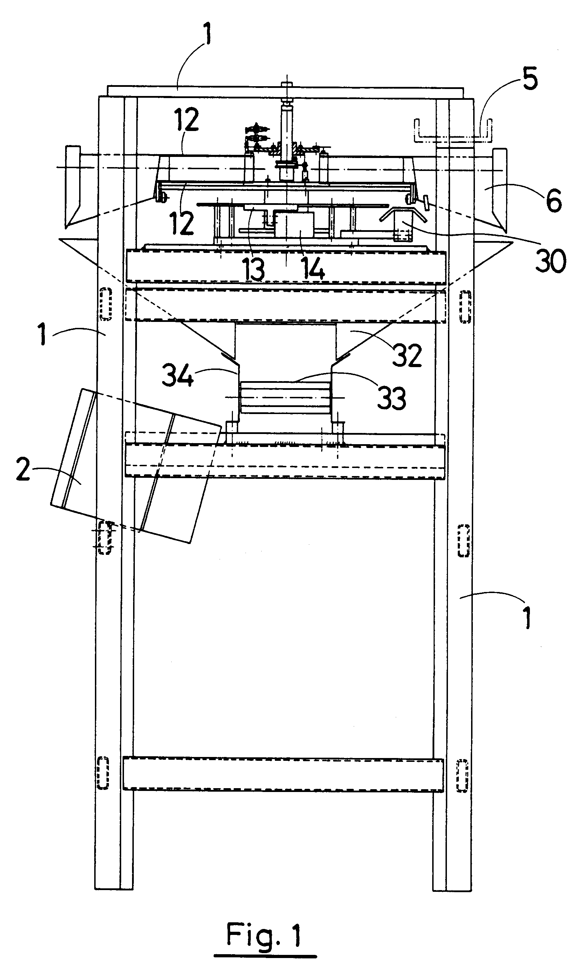

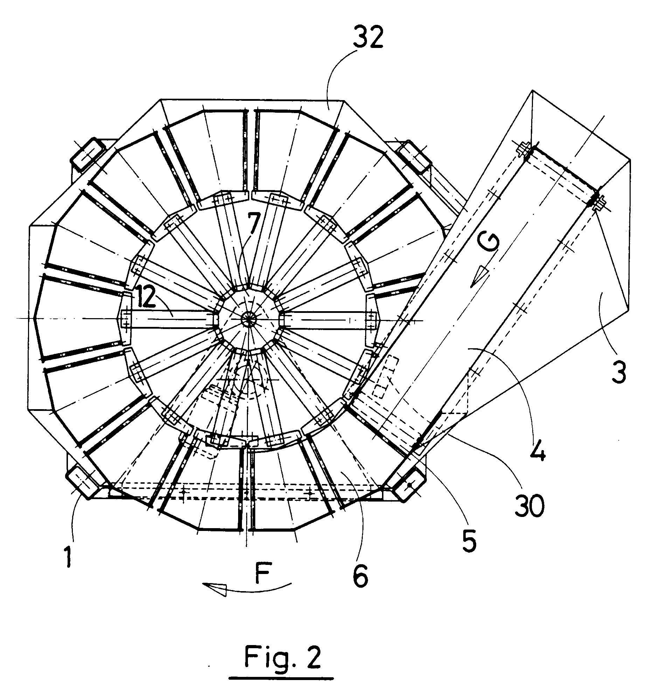

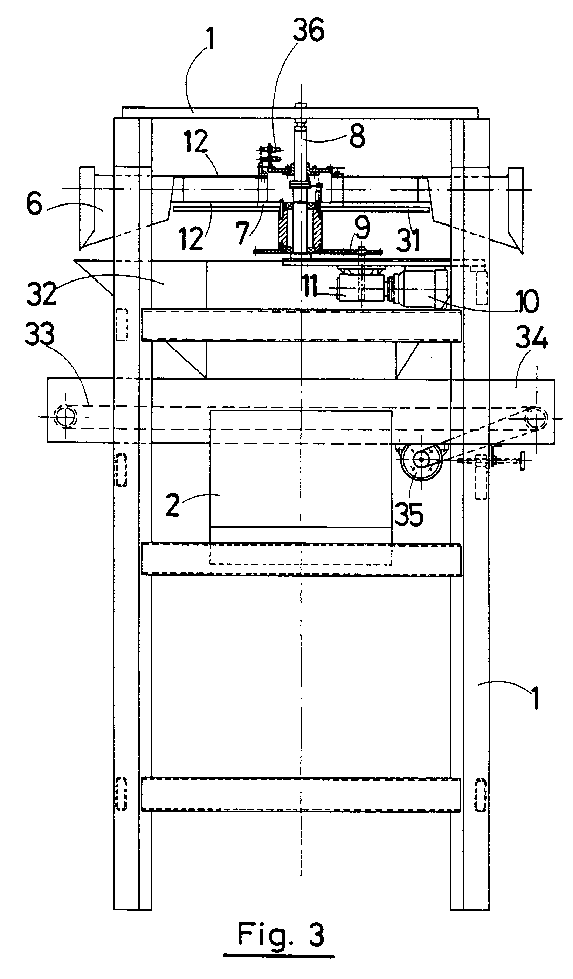

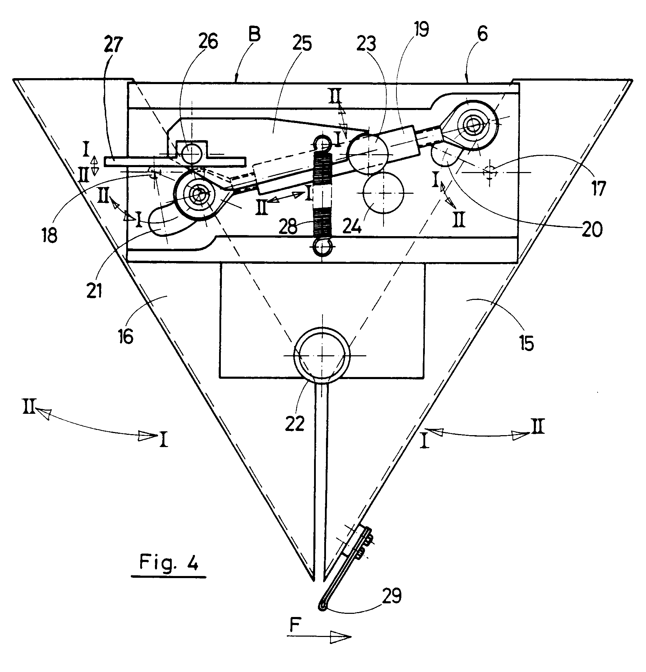

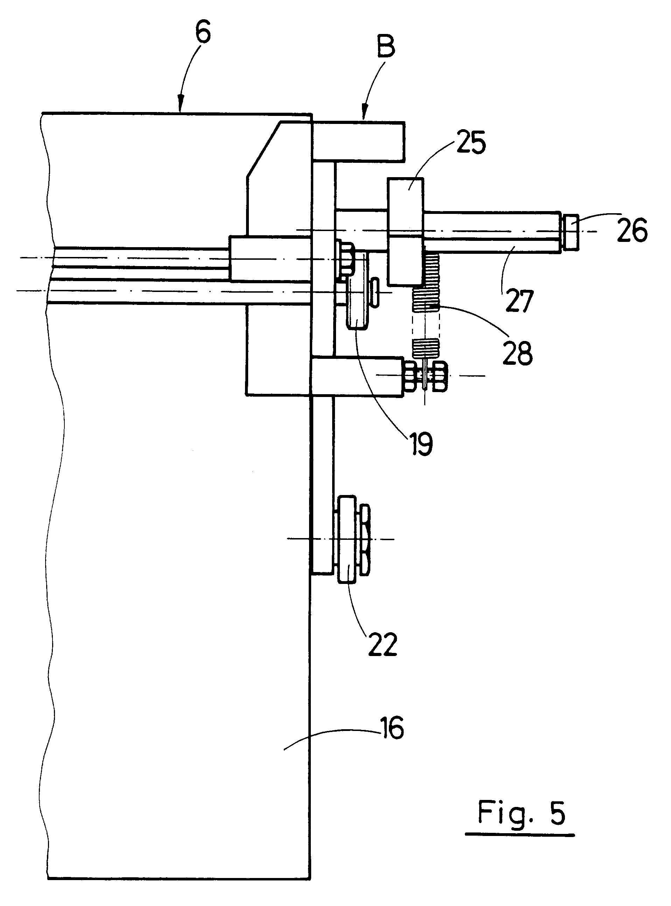

In the drawings, figure 1 represents a weighing machine having the above mentioned improvements and according to an embodiment thereof, according to an elevation view in which the means for conveying the batches of product toward the exit of the machine are arranged facing the observer and this machine exhibits sectioned parts to provide greater information. Figure 2 corresponds to a ground plan view of the machine according to figure 1. Figure 3 shows the machine at a 90° turn to the right, in which position the means for conveying the batches of product toward the exit of the machine are oriented from left to right in relation to the observer and in this view some parts have also been sectioned to provide greater information. Figures 4 and 5 correspond to a detailed view, in greater size, of the buckets of the weighing machine, with figure 4 being an elevation view from the inside of the bucket and closer to the axis of rotation of the central support, and figure 5 is a lateral and partial view of the bucket of figure 4.

### DESCRIPTION OF AN EMBODIMENT OF THE INVENTION

According to the drawings, the automatic weighing machine for food products, in accordance with an embodiment of the invention, comprises structure or frame 1 for the support of the various members of the machine, and this frame allows for the support, and is adjustable in height if need be, of the machine on the floor on which it is mounted and, if need be, it allows for it to be attached to the floor; the frame corresponding to the upper part of the machine should be also understood as the frame, especially in reference to the upper structure of the machine which has, among other elements, means of support and guidance for the means for weighing and for the means for transporting the batches of product already obtained toward the exit of the machine.

The means for feeding or introducing the product into the machine are controlled by the program processing unit, which in this example is located inside housing -2- in which other electric monitoring and control elements may be located. The above mentioned means of feeding include, in the case of the example and preferably, hopper -3- (figure 2) with a conduit equipped with a conveyor, normally an elevator of the product and comprised of endless belt -4- (their means of activation are not represented), which conveys the product until discharge, through its mouth or free end -5- (figures 1 and 2), in an area under which the receiving buckets, such as bucket -6- (see figure 2) are moving in a line. The above mentioned means for feeding the product into the entrance of the machine may be mounted so that their inclination can be varied through suitable devices and these means may also be comprised of other conventional members, according to the needs and actual arrangement of the given facility in which the weighing machine in question is installed. Thus, the means for feeding the product may be activated by an electric motor, through a reduction gear as the case may be, and obviously any other type of motor or suitable means of activation could be used.

Buckets -6- are open on the top to receive the product which is continually being unloaded from mouth -5- of the endless conveyor belt, and in this example there are fourteen buckets, although their number will obviously vary according to the needs; these buckets are arranged in a circle and in an overhanging manner (figures 2, 1 and 3) and are joined radially to central revolving support -7- in relation to a central vertical axis of the machine. This support -7- is mounted and guided around pivot -8-, fastened firmly to frame -1-, with the possible use of suitable rolling means. Central support -7- exhibits its horizontal upper part and this support is activated through transmission means -9- (which in the case represented in figure 3 are made up of a pair of gears, although these transmission means could be any other conventional means), by electric motor -10-which, in this example, is equipped with a reduction gear -11-. In figure 3 the mounting of the above mentioned electric motor can be seen, along with its reduction gear and means of transmission, as well as the structural part of frame -1- and of the guidance and support means which allow for the gentle rotation of central revolving support -7- with its buckets -6-.

Buckets -6- are open at their top to be able to receive the product being delivered by the feeding means and which are being continually unloaded from its mouth -5-, for this purpose the series of buckets -6-, arranged in a circle in the manner described, are shifted by the rotation of support -7- moving in a line under mouth -5-. Each bucket -6- is joined to central support -7- by two elastic bands -12-, visibly horizontal, parallel and superimposed, which allow for an essentially vertical swinging of the respective bucket. In figures 1, 2 and 3 these bands -12- and their arrangement can be seen, so that each pair of bands corresponding to each bucket is fastened to that bucket by one of its ends, while by the opposite end it is fastened to support -7-, with the interposition of a vertical separator to maintain the parallel position of the two bands of each pair.

Buckets -6- move successively and continuously, during their circular motion, on station -13- (figure 1) which has a single weighing means -14- which may be a transducer or any other type of suitable loading cell, this weighing means is connected with the program processing unit and it determines the weight of the bucket with the product that it contains, as well as the tare of the bucket when it is empty and moves onto this weighing station -13-. It should be emphasized that the means or activating group revolving around central support -7- can be mounted underneath this weighing station, since logically there is not any unloading of the product contained in the bucket at this station.

Each bucket -6- has at least one of its walls movably mounted and activated so that it can be opened by suitable means controlled by the program processing unit; and as an embodiment a bucket with two movable walls is represented in figures 4 and 5, and the walls tilt outward to unload the product and revolve, moving close to one another, in order to be able to contain the product inside the bucket. In this example of a possible type of bucket to be used in the weighing machine that is being described, the bucket (figures 4 and 5) has two movable walls -15- and -16- which are joined in tilting axes -17- and -18- to chassis -B-. Both movable walls are connected to each other by a connecting rod -19-, in this case adjustable as to its length; this rod -19- is joined by each of its two ends with movable walls -15- and -16-respectively, and for this purpose chassis -B- has individual openings -20- and -21- suitably lengthened and curved, through which the pivots exhibited by each of these walls pass and they are fastened in an articulated and swinging manner to the respective ends of the connecting rod.

The two walls -15- and -16- are located facing one another in the closed position of the bucket (represented in figure 4), a position in which the bucket can receive and contain the product which is being unloaded onto it and then go on to weigh it, by the support of its idle wheel -22- on station -13- equipped with the weighing means -14-. Connecting rod -19- is provided with a disk or else a wheel -23-, which is supported on another disk or else on wheel -24-, which is in turn joined to chassis -B-. Against disk or wheel -23- lever -25- is applied which is joined to pivot -26- in turn connected to chassis -B-, whose lever has a blade -27- which is bisected by pivot -26-and whose lever -25- is maintained in the position shown in figure 4 thanks to an elastic means such as spring -28-, joined to the top to the above mentioned lever and to the bottom to chassis -B-; and the two walls -15- and -16- are maintained in the closed position of the bucket by the stop and retention action of connecting rod -19- that is exerted by lever -25- on wheel -23- which is supported against wheel -24-.

In figure 4 the bucket is represented in a front view by its inside in relation to the weighing machine and in the operating position, i.e., with its two walls brought together (position I marked with different arrows corresponding to the walls, connecting rod and its ends and the blade), so that once the bucket has been weighed along with the product contained therein and assuming that the product contained in the bucket has been selected by the program processing unit to obtain the desired total weight in a batch of units of product contained in the buckets selected for this purpose (among them the bucket that is being described), the program processing unit determines the opening movement of the walls of the bucket and thereby the unloading of the product contained in the bucket - together with the remaining buckets selected according to what has been indicated -, activating the corresponding electromagnet (not represented in the drawings) which causes the rotation of blade -27-, whose left end (according to figure 4) shifts downward - position II -, so that the right end of lever -25- is raised - moving to position II - by overcoming the counteracting action of spring -28-, thus disk or wheel -23- is freed from the stopping action of the above mentioned end of lever -25- and thus the two movable walls -15-and -16- are shifted outwards- position II - respectively, both by the action of their own weight and by the complement of weight corresponding to the product contained in the bucket, and the connecting rod -19- shifts to position II and its right and left ends also shift to position II.

When the action of the electromagnet of the buckets selected by and according to the program processing unit ceases, the group made up of lever -25- and blade -27-revolve in a direction opposite to the previous one - position I - by the action of spring -28-, and in each of the open buckets, while they circulate by the revolving of central support -7-, their walls are closed when they hit their corresponding tongue -29- (fastened to wall -15- which in this case is the front wall in the direction of the revolution of the series of buckets, i.e., assuming that central support -7- with its buckets -6- revolve in the clockwise direction indicated with the arrow -F- (figures 2 and 4), with stop -30- (figure 1), for which this stop exhibits an entrance ramp or part inclined downward or access for tongue -29-, an upper horizontal part and a downward exit ramp, with tongue -29- being made preferably of a relatively flexible material to absorb the secondary effects that might derive from the collision mentioned. At this moment, wall -15- (which was in open position II) shifts to position I and its tilt in this closing direction causes the shifting of the connecting rod -19-toward position I and of its ends or heads also toward position I, while the other wall -16- tilts simultaneously and in a synchronized manner toward the closing position; all this in such a way that disk or wheel -23- slides underneath and against the lower edge of lever -25-, until it comes to rest on disk or wheel -24-, thus facilitating the raising of connecting rod -19-, and disk or wheel -23- comes to fit into the recess formed by the curved end of lever -25-, thus the connecting rod is held in a stable closing position of the bucket in which the bucket can receive the product which is unloaded onto it at the proper time, and this closing position is maintained thanks to the combined action of lever -25-, spring -28- and disk or wheel -23- supported against disk or wheel -24-.

Stop -30- is fastened to chassis -1-. Each of the electromagnets corresponding to buckets -6-, for the activation of blade -27- and to cause opening of the bucket, is mounted on support -31- joined to central support -7- and located underneath it (figure 3, in which the electromagnets are not represented).

Obviously there will be as many electromagnets as there are buckets and these electromagnets will be located under the blades -27-to activate the two walls of each bucket toward its opening position, according to what has been explained.

In order to direct the unloading of the batch of units of the product contained in the buckets selected from the series of buckets by the program processing unit, to obtain the desired total weight of the product in question, the weighing machine comprises, underneath the series of buckets -6-, a collecting hopper -12- (figures 1, 2 and 3), which collects the given batch of units of the product and conveys it toward the exit of the machine. In this example, the means for transporting the batch of units of the product which are being successively unloaded from the buckets selected by the program processing unit and by collecting hopper -32-, consist of endless belt -33- located between two lateral walls -34- which determine a suitable channel for the exit of the product. The direction of the movement of the upper part of the endless belt may be toward the right or toward the left (according to figure 3), according to the arrangement of the facility in which the weighing machine is mounted, with the desired total weight preset by the user of the weighing machine. The setting of the total weight may be done by the user, along with the tolerance he desires, by activating the corresponding controls for adjustments such as those comprised by the program processing unit located in housing -2-, in which the means for monitoring and adjusting can also be located, for the electric motor for endless feeding belt -4-at the entrance of the machine, for electric motor -10- and electric motor -35- which, by means of a corresponding transmission or any other conventional means activates endless belt -33- for conveying the product toward the exit of the machine.

Weighing station -13- has a horizontal track of a length which is sufficient for the full bucket to be weighed to have time to stabilize, to obtain a weight measurement that is as exact as possible, with the elimination of possible oscillations and vibrations due both to the supply of the product onto the bucket, and to its movement the specific mounting of each bucket by a pair of elastic bands -12-contributing in a positive manner to this stabilization.

The control of the opening of the walls of buckets -6- is executed by the program processing unit which decides, in accordance with the strategy it is to follow and with the information that it receives on a permanent basis as to the weight of the buckets filled with product and their tare, together with their position at each moment as will be described further on, which ones of the buckets should be opened to unload the product they contain.

The buckets that have not been selected since their product weight cannot be combined with those chosen, when they circulate and move underneath unloading mouth -5- of the means for feeding of the machine (actually unloaded by endless belt -4- in this example), do not receive product any more, since the program processing unit determines stopping of these feeding means, and these buckets move past weighing station -13- and are again considered by the program processing unit for their possible integration into the following batch of product to be obtained, without any unloading of the rejected product, as occurs in other weighing machines that are already known; thus the above mentioned product contained in the buckets not selected is treated more gently than in known machines.

The transmission of data originating from the means and devices mounted on revolving supports -7- and -31- to the program processing unit can be implemented by conventional means, such as brush contacts, infrared rays, optic fibers or any other suitable means; and the electric connection for the weighing means -14- (load cells or transducers, etc.) can be accomplished e.g. by electric conductors or others and even by electric induction, i.e. without wires, which allows for greater reliability and safety.

To provide the program processing unit with necessary information on the situation of the buckets at each moment, in the example represented in figure 3, two detecting means -36-are disposed at different heights. In this way the upper detector receives a signal for each turn of support -7-, through a guidepost that reaches the height of and passes very close to said higher detector. This guidepost is mounted on one of the internal fasteners of the pair of bands of one of the buckets in the series and determines the origin or revolution reference and the reset to zero (̵in the program processing unit)̵ for each revolution of said series of buckets, while the lower detector receives the signal from each of the other buckets when they pass in front of it. For this purpose on each inner support of the pair of bands -12- of each bucket another, shorter guidepost is disposed having a height essentially equal to that of the lower detector and passing close to it.

The stabilization of the bucket that has just received the product from unloading mouth -5- is favored by the time that elapses from said loading area to the weighing station, thus by the eventual and appropriate support of the buckets, by their wheel -22-, on a track fixed on frame -1- (not represented) and that is interrupted at least in weighing station -13- and stop -30-.

In the drawings the conduits for electricity and those for any other fluid used in the weighing machine have not been represented; these conduits connect the various activating devices of the machine among themselves; nor have the accessories for the monitoring and regulating of these devices by the programming processing unit been represented, including the weighing machine, conventional means of control, monitoring and safety, as well as for other specific functions that may be desired.

The weighing machine equipped with the improvements described may exhibit protective covers or casings for the sake of the user and for its finishing, these covers may be totally or partially removable in order to gain access to the internal members of the machine.

The functioning of the automatic weighing machine for food products equipped with the improvements according to the invention takes place in practice according to what has been described up to now and illustrated in the drawings and can be summed up in the following manner:

The product placed in hopper -3- is conveyed, according to arrow -G- (figure 2), by endless belt -4- and the units of the above mentioned product being conveyed are continuously unloaded by end or mouth -5- of said endless belt, falling onto a bucket -6- which, at each moment, passes underneath said mouth, while central support -7- revolves with said buckets according to arrow -F- (figure 2); and the means for feeding the units of product to the entrance of the machine are controlled by the program processing unit. Each bucket -6-, which receives the units of product in the manner indicated, continues to move according to revolving movement already described, until its wheel -22- is supported on weighing station -13-, on which it undergoes a slight raising and on which it continues to move, and its total weight is obtained (i.e. of the bucket and the product contained in the bucket) by weighing means -14-, and when there is a determined number of filled buckets already weighed and located between weighing station -13- and stop -30-, the program processing unit orders the unloading of those full buckets that have been selected in order to obtain, with the combination of the weights of the units of product contained in them, each batch of units of the product with a total weight equal to that desired for each batch and also according to a preset tolerance; for this purpose the opening of the walls of the above mentioned selected buckets takes place by the corresponding activation of the electromagnets of said buckets, and this causes, in the manner explained earlier, this opening and the consequent simultaneous unloading of the totality of units of product contained in the various buckets selected, and their contents of units of the product is unloaded, by collecting hopper -32-, onto endless belt -33-, which conveys the above mentioned batch of units of the product toward the exit of the machine.

The buckets filled with product and that have not been unloaded, since they were not selected by the programming processing unit, will not receive more product from mouth -5-when they pass underneath it, thanks to the control that the program processing unit exerts; while the buckets that have remained with their walls open, since they have been selected for unloading, will be closed when they pass over stop -30-, which will continuously close them so that they can receive new product when they subsequently pass underneath mouth -5-.

This process is continuously repeated as many times as the above mentioned batches of units of product are obtained with the desired total weight and tolerance for these batches.

It should be pointed out that when the weighing machine is placed into operation, the series of buckets makes a rotation motion sufficient so that all the empty buckets pass over the weighing station in order to obtain its weight or tare, that is recorded by the program processing unit and each time that a bucket passes empty over this weighing station, its tare is again weighed, since the buckets may have remainders in them that could modify their tare.

## Claims

1. An automatic weighing machine for food products, comprising means (3,4) for feeding the products into an entrance of the machine including at least one endless belt (4), which discharges said products into an area (5) under which receiving buckets (6) move in a line and are open on the top to receive the products unloaded from said endless belt (4), means (14) for weighing the product contained in each bucket (6), means (15,16) for unloading said buckets (6) onto means (32,33) for conveying said products to the exit of the machine, and a programmable processing unit which continually records the real weight of the products collected by each of said buckets (6) as they continually move by, and when the total weight of the products contained in a combination of buckets (6) reaches a value with a tolerance preset by the user of the machine, the processing unit orders the unloading of those buckets (6), said buckets (6) being arranged in a circle and in an overhanging manner and are joined radially by suitable means (12) to a central support (7) revolving in a central vertical axis (8), characterized in that each bucket (6) is joined to the central support (7) by two horizontal, parallel and superimposed elastic bands (12) which allow for the vertical swinging of the bucket (6), a station (13) with a single weighing means (14) connected to the processing unit is provided over which the buckets (6) continually pass in succession, said processing unit taking the tare of the buckets (6) into account when deriving the weight of the products from weight data provided by said single weighing means (14).

2. The automatic weighing machine as set forth in claim 1, wherein said buckets (6) each have two movable walls (15,16) pivotally mounted by pivot axes (17,18) to a chassis (B) and linked to each other by a connecting rod (19) which is linked to a first wall (15) of said walls (15,16) at a position located in a level extending above the pivot axis (17) of said first wall (15), whereas it is linked to the second wall (16) at a position located in a level extending below the pivot axis (18) of said second wall (16), so that upon pivoting said first wall (15) in one direction the other wall (16) is pivoting in the opposite direction, and vice versa.

3. The automatic weighing machine as set forth in claim 2, wherein a disk or wheel (23) is mounted to the connecting rod (19) and a lever (25) pivotally mounted to the chassis (B) is applied to said disk or wheel (23) and biased thereto by a spring (28) affixed at its ends to said lever (25) and said chassis (B) so as to maintain the walls (15,16) in a closed position, and actuation means controlled by the processing unit are provided to pivot said lever (25) in counteraction to the bias of said spring (28) to enable an opening movement of said walls (15,16) under their own weight.

4. The automatic weighing machine as set forth in claim 3, wherein said lever (25) has a lower edge on which said disk or wheel (23) is rolling upon pivotal movement of said lever (25), said lower edge ending in a curved recess in which said disk or wheel (23) rests in a stable condition in the closed position of said walls (15,16).

## Patentansprüche

1. Automatische Waage für Lebensmittel, enthaltend Einrichtungen (3,4) zum Zuführen der Lebensmittel in einen Eingang der Maschine mit wenigstens einem Endlosriemen (4), der die Lebensmittel in einen Bereich (5) abgibt, unter dem sich in einer Reihe Aufnahmeeimer (6) bewegen, die oben offen sind, um die von dem Endlosriemen (4) abgegebenen Lebensmittel aufzunehmen, Einrichtungen (14) zum Wiegen der in jedem Eimer (6) enthaltenen Lebensmittel, Einrichtungen (15,16) zum Entladen der Eimer (6) auf Einrichtungen (32,33) zum Überführen der Lebensmittel zum Ausgang der Maschine, und eine programmierbare Prozessoreinheit, die kontinuierlich das echte Gewicht der Lebensmittel aufzeichnet, die in jedem Eimer (6) enthalten sind, während diese sich kontinuierlich bewegen, und die dann, wenn das Gesamtgewicht der in einer Kombination von Eimern (6) enthaltenen Lebensmittel einen Wert innerhalb einer vom Benutzer der Maschine vorgegebenen Toleranz erreicht, das Entladen jener Eimer (6) anordnet, wobei die Einmer (6) in einem Kreis und in auskragender Weise angeordnet sind und radial durch geeignete Einrichtungen (12) mit einem zentralen Träger (7) verbunden sind, der in einer vertikalen Mittenachse (8) rotiert, **dadurch gekennzeichnet**, daß jeder Eimer (6) mit dem zentralen Träger (7) durch zwei horizontale, parallele und übereinander angeordnete elastische Bänder (12) verbunden ist, die ein vertikales Schwingen des Eimers (6) ermöglichen, eine Station (13) mit einer einzigen Wägeeinrichtung (14), die mit der Prozessoreinheit verbunden ist, vorgesehen ist, über die die Eimer (6) nacheinander kontinuierlich laufen, wobei die Prozessoreinheit das Eigengewicht der Eimer (6) berücksichtigt, wenn sie das Gewicht der Lebensmittel aus den von der einzigen Wägeeinrichtung (14) gelieferten Gewichtsdaten ermittelt.

2. Automatische Waage nach Anspruch 1, bei der die Eimer (6) jeweils zwei bewegliche Wände (15,16) aufweisen, die mittels Schwenkachsen (17,18) schwenkbar an einem Rahmen (B) gelagert sind und miteinander durch eine Verbindungsstange (19) gelenkig verbunden sind, die an einer ersten Wand (15) der genannten Wände (15,16) an einer Stelle angelenkt ist, die in einer Ebene liegt, die sich oberhalb der Schwenkachse (17) dieser ersten Wand (15) erstreckt, während sie an der zweiten Wand (16) an einer Stelle angelenkt ist, die in einer Ebene liegt, die sich unterhalb der Schwenkachse (18) dieser zweiten Wand (16) erstreckt, sodaß beim Schwenken der ersten Wand (15) in der einen Richtung die andere Wand (16) in der entgegengesetzten Richtung schwenkt, und umgekehrt.

3. Automatische Waage nach Anspruch 2, bei der eine Scheibe oder Rolle (23) an der Verbindungsstange (19) befestigt ist und ein an dem Rahmen (B) schwenkbar gelagerter Hebel (25) an der Scheibe oder Rolle (23) anliegt und durch eine Feder (28) dorthin vorgespannt ist, die mit ihren Enden an dem Hebel (25) und dem Rahmen (B) befestigt ist, um die Wände (15,16) in einer Schließstellung zu halten, und wobei Betätigungseinrichtungen vorgesehen sind, die durch die Prozessoreinheit gesteuert sind, um den Hebel (25) entgegen der Vorspannung der Feder (28) zu verschwenken, um eine Öffnungsbewegung der Wände (15,16) unter ihrem Eigengewicht zu ermöglichen.

4. Automatische Waage nach Anspruch 3, bei der der Hebel (25) einen unteren Rand aufweist, auf dem die Scheibe oder Rolle (23) bei der Schwenkbewegung des Hebels (25) rollt und der in einer bogenförmigen Ausnehmung endet, in der die Scheibe oder Rolle (23) in einem stabilen Zustand in der Schließstellung der Wände (15,16) ruht.

## Revendications

1. Machine automatique de pesée de produits alimentaires, comprenant des moyens (3, 4) pour amener les produits à une entrée de la machine, ces moyens comprenant au moins une courroie sans fin (4) qui décharge lesdits produits dans une zone (5) en dessous de laquelle des godets récepteurs (6) se déplacent sur une ligne et sont ouverts en haut pour recevoir les produits déchargés de ladite courroie sans fin (4), un moyen (14) pour peser les produits contenus dans chaque godet (6), des moyens (15, 16) pour décharger lesdits godets (6) sur des moyens (32, 33) servant à transporter lesdits produits jusqu'à la sortie de la machine, ainsi qu'une unité de traitement programmable qui enregistre de façon continue le poids réel des produits collectés par chacun desdits godets (6) au cours de leur déplacement continu et, quand le poids total des produits contenus dans une combinaison de godets (6) atteint une valeur avec une tolérance préréglée par l'utilisateur de la machine, l'unité de traitement ordonne le déchargement desdits godets (6), lesdits godets (6) étant disposés sur un cercle et selon un mode en surplomb et étant reliés radialement par des moyens appropriés (12) avec un support central tournant (7) en relation avec un axe vertical central (8), machine caractérisée en ce que chaque godet (6) est joint au support central (7) par deux bandes élastiques horizontales, parallèles et superposées (12), qui permettent le pivotement vertical du godet (6), un poste 13 comportant un seul moyen de pesée (14) est relié à l'unité de traitement de programme et est disposé de façon que les godets (6) passent continuellement et successivement au dessus de lui, ladite unité de traitement tenant compte de la tare des godets (6) lors de la détermination du poids des produits à partir des données de poids qui sont fournies par ledit unique moyen de pesée (14).

2. Machine automatique de pesée selon la revendication 1, dans laquelle lesdits godets (6) comportent chacun deux parois mobiles (15, 16) montées de façon pivotante par des axes de pivotement (17, 18) sur un châssis (B) et reliées l'une avec l'autre par une tige de liaison (19) qui est reliée à une première paroi (15) desdites parois (15, 16) dans une position placée à un niveau situé au dessus de l'axe de pivotement (17) de ladite première paroi (15), tandis qu'elle est reliée à la seconde paroi (16) dans une position placée à un niveau situé en dessous de l'axe de pivotement (18) de ladite seconde paroi (16), de telle sorte que, lors d'un pivotement de ladite première paroi (15) dans une direction, l'autre paroi (16) soit déplacée par pivotement dans la direction opposée, et inversement.

3. Machine automatique de pesée selon la revendication 2, dans laquelle un disque ou roue (23) est monté sur la tige de liaison (19) et un levier (25), monté de façon pivotante sur le châssis (B), est mis en place sur ledit disque ou roue (23) est poussé par un ressort (28) fixé par ses extrémités sur ledit levier (25) et ledit châssis (B) de façon à maintenir les parois (15, 16) dans une position de fermeture, des moyens d'actionnement commandés par l'unité de traitement étant prévus pour faire pivoter ledit levier (25) en contrebalançant la poussée du ressort (28) afin de permettre un mouvement d'ouverture desdites parois (15, 16) sous l'effet de leur propre poids.

4. Machine automatique de pesée selon la revendication 3, dans laquelle ledit levier (25) comporte un bord inférieur sur lequel ledit disque ou roue (23) roule lors d'un mouvement de pivotement dudit levier (25), ledit bord inférieur se terminant dans un évidement incurvé où le disque ou roue (23) repose dans une condition stable dans la position de fermeture desdites parois (15, 16).
